# EUROPEAN PATENT APPLICATION

(11) **EP 4 727 105 A1**
(43) Date of publication of application: **15.04.2026**
(21) Application number: 24818800.5
(22) Date of filing: 07.06.2024
(51) Int. Cl.: H04M 1/72442, G06F 16/957

(54) **MULTIMEDIA DATA PRE-LOADING METHOD AND APPARATUS, ELECTRONIC DEVICE, AND STORAGE MEDIUM**

(30) Priority: 08.06.2023 CN 202310679148
(71) Applicant: Beijing Zitiao Network Technology Co., Ltd., Beijing 100190 (CN)
(72) Inventor: LONG, Yunxiang, Beijing 100028 (CN); XIONG, Yiming, Beijing 100028 (CN); HONG, Cheng, Beijing 100028 (CN); ZHANG, Yuxiang, Beijing 100028 (CN)
(74) Representative: Grünecker Patent- und Rechtsanwälte PartG mbB
(86) International application number: PCT/CN2024/098221
(87) International publication number: WO 2024/251274

(57) **Abstract**

The present disclosure relates to a multimedia data pre-loading method and apparatus, an electronic device, and a storage medium. The method comprises: acquiring target operation data for multimedia which have been played back; acquiring target feature data of multimedia to be played back; and at least on the basis of the target operation data and the target feature data, pre-loading the multimedia to be played back.

## Description

### CROSS-REFERENCE TO RELATED APPLICATIONS

This application is based on and claims priority to Chinese Patent Application No. 202310679148.1, and filed on June 08, 2023, the entire disclosure of the Chinese Patent Application is hereby incorporated by reference in its entirety.

### TECHNICAL FIELD

The present disclosure relates to the field of computer technology, and in particular to a multimedia data pre-loading method, apparatus, electronic device and storage medium.

### BACKGROUND

As terminal products represented by mobile phones become popular, users can conveniently playback their favorite music on the terminals. If the user's network environment is not very good, it will affect the music played back on the terminals in many cases, for example, slow data loading and playback buffering will occur. Therefore, music needs to be pre-loaded to avoid playback buffering caused by network quality.

### SUMMARY

The present disclosure provides a multimedia data pre-loading method, apparatus, electronic device and storage medium.

According to one aspect of the present disclosure, a multimedia data pre-loading method is provided, the method including:
acquiring target operation data for multimedia that has been played back;
acquiring target feature data of multimedia to be played back;
pre-loading the multimedia to be played back, based on at least the target operation data and the target feature data.

In some embodiments, the target operation data includes a plurality of target operation behaviors;
the pre-loading the multimedia to be played back, includes:
determining target weights corresponding to the plurality of target operation behaviors respectively;
pre-loading the multimedia to be played back based on the target weights and the target feature data, to obtain pre-load data.

In some embodiments, the pre-loading the multimedia to be played back based on the target weights and the target feature data, includes:
determining priorities corresponding to the multiple target operation behaviors respectively, based on the target weights;
pre-loading the pre-load data corresponding to the target feature data based on the priorities.

In some embodiments, the multimedia that has been played back includes a first multimedia and a second multimedia having adjacent playback cycles, and the first multimedia and the multimedia to be played back have adjacent playback cycles;
the determining target weights corresponding to the plurality of target operation behaviors respectively includes:
determining initial weights corresponding to the plurality of target operation behaviors respectively, based on feature data of the second multimedia;
adjusting the initial weights based on feature data of the first multimedia to obtain the target weights corresponding to the multiple target operation behaviors respectively.

In some embodiments, the method further includes:
acquiring network status information;
determining a target amount of the pre-load multimedia to be played back based on the network status information.

In some embodiments, the pre-loading the multimedia to be played back includes:
acquiring pre-load data of the target amount of the multimedia to be played back, based on the network status information, the target operation data and the target feature data.

According to a second aspect of the present disclosure, a multimedia data pre-loading apparatus is provided, wherein the apparatus includes:
a target operation data acquisition module configured to acquire target operation data for multimedia that has been played back;
a target feature data acquisition module configured to acquire target feature data of multimedia to be played back ;
a pre-loading module configured to pre-load the multimedia to be played back, based on at least the target operation data and the target feature data.

In some embodiments, the target operation data includes a plurality of target operation behaviors; the pre-loading module is specifically configured to:
determine target weights corresponding to the plurality of target operation behaviors respectively;
pre-load the multimedia to be played back based on the target weights and the target feature data, to obtain pre-load data.

In some embodiments, the pre-loading module is specifically configured to:
determine priorities corresponding to the multiple target operation behaviors respectively, based on the target weights;
pre-load the pre-load data corresponding to the target feature data based on the priorities.

In some embodiments, the multimedia that has been played back includes a first multimedia and a second multimedia having adjacent playback cycles, and the first multimedia and the multimedia to be played back have adjacent playback cycles; the pre-loading module is specifically configured to:
determine initial weights corresponding to the plurality of target operation behaviors respectively, based on feature data of the second multimedia;
adjust the initial weights based on the feature data of the first multimedia to obtain the target weights corresponding to the multiple target operation behaviors respectively.

In some embodiments, the apparatus further includes:
an information acquisition module configured to acquire network status information;
an amount determination module configured to determine a target amount of the pre-load multimedia to be played back based on the network status information.

In some embodiments, the pre-loading module is specifically configured to:
acquire pre-load data of the target amount of the multimedia to be played back, based on the network status information, the target operation data and the target feature data.

According to a third aspect of the present disclosure, an electronic device is provided, the electronic device comprising: a memory; and a processor, the memory having a computer program and/or instructions stored thereon, wherein the processor, when executing the program and/or instructions, carries out the method as described above.

According to a fourth aspect of the present disclosure, there is provided a computer-readable storage medium having thereon stored a computer program and/or instructions, which, when executed by a processor, carry out the method as described above.

According to a fifth aspect of the present disclosure, there is provided a computer program product containing instructions, which, when executed by a processor, cause the processor to carry out the method as described above.

According to a sixth aspect of the present disclosure, there is provided a computer program containing computer programs, which, when executed by a processor, cause implementation of the method as described above.

### BRIEF DESCRIPTION OF THE DRAWINGS

Further details, features and advantages of the present disclosure are disclosed in the following description of exemplary embodiments in conjunction with the accompanying drawings, in which:
FIG. 1 is a flow chart of a multimedia data pre-loading method provided by an exemplary embodiment of the present disclosure;
FIG. 2 is a scenario schematic diagram of a user's operation behavior during music playing back in an exemplary embodiment of the present disclosure;
FIG. 3 is a schematic block diagram of functional modules of a multimedia data pre-loading apparatus provided by an exemplary embodiment of the present disclosure;
FIG. 4 is a structural block diagram of an electronic device provided by an exemplary embodiment of the present disclosure;
FIG. 5 is a structural block diagram of a computer system provided by an exemplary embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be embodied in various forms and should not be construed as being limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "including" and its variants are open-ended including, that is, "including but not limited to". The term "based on" is "at least partially based on"; the term "one embodiment" means "at least one embodiment"; the term "another embodiment" means "at least one other embodiment"; the term "some embodiments" means "at least some embodiments". Related definitions of other terms will be given in the following description. It should be noted that the concepts of "first" and "second" mentioned in the present disclosure are only used to distinguish different apparatuses, modules or units, and are not used to limit the order or interdependence of the functions performed by these apparatuses, modules or units.

It should be noted that the modifications of "a" and "a plurality" mentioned in the present disclosure are schematic rather than limiting, and those skilled in the art should understand that unless the context clearly indicates otherwise, they should be understood as "one or more".

Names of messages or information exchanged between multiple apparatuses in the embodiments of the present disclosure are only for illustrative purposes, and are not intended to limit the scope of these messages or information.

It may be understood that before using the technical solutions disclosed in the embodiments of the present disclosure, a user should be informed of the type, range of usage, usage scenario, etc. of personal information involved in the present disclosure in an appropriate manner in accordance with relevant laws and regulations, and the authorization of the user should be obtained.

For example, in response to receiving an active request from a user, prompt information is sent to the user to clearly inform the user that the operation requested to be performed will require access to and usage of the user's personal information. In this way, the user may independently choose whether to provide the personal information to software or hardware such as an electronic device, an application, a server, or a storage medium that performs the operation of the technical solution of the present disclosure according to the prompt information.

As an alternative but non-limiting implementation, in response to receiving an active request from the user, the prompt information may be sent to the user in the form of a pop-up window, for example, and the prompt information may be presented in text in the pop-up window. In addition, the pop-up window may further include a selection control for the user to choose whether to "agree" or "disagree" to provide the personal information to the electronic device. It may be understood that the above process of notifying and acquiring the authorization from the user is merely illustrative and is not intended to limit the implementations of the present disclosure. Other manners that satisfy the requirements of relevant laws and regulations may also be applied to the implementations of the present disclosure.

When a certain type of user plays back multimedia through a terminal such as a mobile phone, the type of user often performs operations, such as dragging a progress bar or fast-forwarding, on a multimedia playback interface, to watch or listen to a favorite part of the multimedia, or repeatedly watch or listen to the favorite part of the multimedia. This often involves the need of pre-loading multimedia.

In the related art, when multimedia is pre-loaded, the multimedia would be pre-loaded over a large range in many cases. Although this can ensure loading of multimedia in advance, the loaded data may not be the data that the user wants to play back, which may cause a waste of user traffic and lead to low pre-loading efficiency.

Therefore, in order to improve the efficiency of multimedia pre-loading and make the pre-load data obtained by pre-loading in advance as far as possible to be the data that a certain type of user likes or wants to play back, embodiments provided in the present disclosure will acquire the pre-load data of the multimedia to be played back based on the relevant operation data of a certain type of user for the multimedia and the feature data of the multimedia to be played back, so as to realize the pre-loading of the multimedia to be played back. The pre-load data obtained in this way can meet the playback habits and preferences of a certain type of user, and can greatly improve the efficiency of multimedia pre-loading. The multimedia in the embodiments may be data such as music or video, the embodiments will be described by taking the multimedia being music as an example, but the embodiments are not so limited.

In some embodiments, historical operational behavior data of a certain type of user for music can be acquired, for example, the song switching behavior of a certain type of user during the previous music playback process, and can also include operation behaviors such as dragging a progress bar, fast forward operation, or rewind operation, for example, a certain type of user has listened to m% of song switching, dragging a progress bar, fast forwarding songs, or rewinding songs, etc., at least one of these historical operational behavior data can be input into a behavior adjuster to adjust the weight for each operational behavior of a certain type of user.

For example, one day can be a playback cycle, if a certain type of user plays back music through a music player for 5 days, the operational behavior data during the first day of playing back music can be input into a behavior adjuster to obtain an initial weight for the behavioral operation of this type of user. The data in subsequent 4 days can be input into the behavior adjuster in sequence according to the number of days, and the weight for the behavioral operation of this type of user can be continuously adjusted to obtain the final adjusted target weight. In some embodiments, the proportion of historical operation behavior data of a certain type of user may be inversely correlated with the length of time from the current time. That is, the farther the operation behavior is from the current time, the lower its proportion in the entire historical operation behavior data, and vice versa.

In some embodiments, during 5 days of music playback by a certain type of user, the first 4 days can be used as a music playback cycle, and the operating behavior of the certain type of user in these 4 days can be input into a behavior adjuster to obtain an initial weight for the behavioral operation of the certain type of user, and the operation behavior data of the 5th day can be input into the behavior adjuster to adjust the weight for the behavioral operation of the certain type of user, thereby optimizing the initial weight to obtain the adjusted target weight. Subsequently, the latest music operation behavior data of a certain type of user within one day can be continuously input into the adjuster to continuously adjust the weight for the behavior operation, so that the adjusted weight can more fit with the operation habits and music playback preferences of a certain type of user.

The target weight obtained by the behavior adjuster can be used to prepare for pre-loading of the next playback cycle. In some embodiments, the behavior adjuster may be a preset model, such as a neural network model, the preset model can be continuously trained through historical operation behavior data of a certain type of user, and then the target weight may be obtained through the trained preset model.

In embodiments provided in the present disclosure, still taking the multimedia being music as an example, the multimedia to be played back can be acquired, the multimedia to be played back can be the music that a certain type of user directly selects to play back, for example, a certain type of user generates a list of music to be played back by selecting his or her favorite music, and the music list includes multiple pieces of music. The multimedia to be played back may also be a music playlist automatically generated by the system for a certain type of user, for example, a music playlist that can be recommended for a certain type of user based on the music played back by the certain type of user in the past, of course, the music in the music playlist may also be music that is randomly generated, or music that is played back more frequently by other certain type of user, etc., the embodiments are not limited thereto.

In some embodiments, the multimedia to be played back may include a music playlist, which may include one or more pieces of music, the multimedia to be played back may also carry target feature data of the music in the music playlist. The target feature data may be at least one of a chorus, a verse, a drum beat, and a song type, etc., the target feature data may also include the range of each part of the chorus, the verse, and the drum beat, the song type may include DJ, pop, or folk songs, etc.

In embodiments provided by the present disclosure, by determining target weights corresponding to multiple target operation behaviors of a certain type of user respectively as described above, and in combination with the target feature data of the multimedia to be played back, the multimedia to be played back can be pre-loaded, for example, the data to be loaded first and the range of the loaded data can be determined.

In some embodiments, current network status information, such as network quality and network type, can also be acquired, and the amount of multimedia to be played back that needs to be loaded and the pre-load data of the amount of multimedia, or the like can be determined in combination with the network status information, the target weights and the target feature data. That is, it can be determined how many songs need to be loaded, the range of pre-load data in each song, etc., for example, the music playlist includes 10 songs, and it is determined that 5 of them need to be pre-loaded, and the corresponding loading ratio of the corresponding chorus part or the drum part in each song that needs to be loaded, etc. the embodiments are not limited to this.

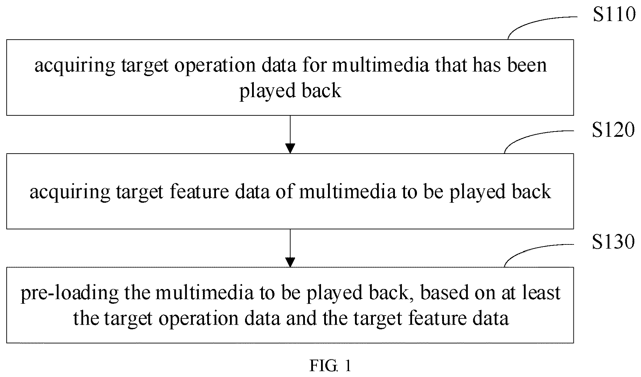

Based on the above embodiments, in another embodiment provided by the present disclosure, a multimedia data pre-loading method is further provided. As shown in FIG. 1, the method may include the following steps:

In step S110 , target operation data for multimedia that has been played back can be acquired.

In some embodiments, when relevant data of a certain type of user is acquired, the certain type of user may be consulted through a pop-up window or the like, and the data will be acquired only after obtaining the consent from the certain type of user. In embodiments, the multimedia may be data such as music or video, and the target operation data may include behavioral data of a certain type of user, such as song switching, fast forwarding, rewinding, or playing back a specific part of a song, for example, a certain type of user 's song switching, dragging a progress bar, or fast forwarding or rewinding.

In step S120, target feature data of multimedia to be played back can be acquired.

In some embodiments, taking the multimedia to be played back being music as an example, the target feature data may include at least one of a chorus, a verse, a drum beat, and a song type, etc., the target feature data may also include the range of each part of the chorus, the verse, and the drum beat, the song type may include DJ, pop, or folk songs, etc.

This can be done by performing feature extraction and feature recognition for the multimedia to be played back, for example, when the multimedia to be played back is music, features in the music, such as the chorus part, the drum part or the like, can be recognized.

In step S130, the multimedia to be played back can be pre-loaded based on at least the target operation data and the target feature data.

In some embodiments, the multimedia to be played back may be pre-loaded based on the target operation data and the target feature data. For example, based on the target operation data, a weight corresponding to each operation behavior in the target operation data may be obtained, and a part of the target multimedia corresponding to each operation behavior may be pre-loaded in sequence according to the weight. For example, an operation behavior of a certain type of user of playing back the chorus has the highest weight, so the chorus part can be loaded first, and after the chorus part is pre-loaded, other parts can be pre-loaded. In some embodiments, when the chorus part is pre-loaded, the pre-load amount can be set, for example, the pre-loaded part accounts for 10% of the weight data of that part, etc. for example, for a piece of music, when the chorus part is pre-loaded with 10% of the total chorus, it can be determined that the pre-loading of the chorus part is completed. In some embodiments, a pre-load amount and the amount of pre-load multimedia can also be determined based on the network quality or network type, for example, when the network quality is good or WIFI is used, the pre-load amount or the amount of pre-load multimedia can be increased. When the network quality is weak or 4G is used, the pre-load amount or the amount of pre-load multimedia can be reduced, and so on.

The multimedia data pre-loading method provided by the embodiment of the present disclosure acquires the target operation data of a certain type of user for the multimedia that has been played back, and acquires the target feature data of the multimedia to be played back, and acquires the pre-load data of the multimedia to be played back based at least on the target operation data and the target feature data. Since the pre-load data of the pre-loadd target multimedia is related to the operation data of a certain type of user and the target feature data of the multimedia to be played back, the multimedia to be played back can be accurately pre-loaded, greatly improving the pre-loading efficiency.

Based on the above embodiments, in another embodiment provided by the present disclosure, the target operation data includes multiple target operation behaviors, and the above step S130 may further specifically include the following steps:
S131, determining target weights corresponding to the multiple target operation behaviors respectively.

In some embodiments, the target operation data may include multiple target operation behaviors. The target operation data performed by a certain type of user when playing back multimedia in a historical stage can be input into a behavior adjuster to obtain the weights corresponding to the multiple target operation behaviors., and the target operation data for the next playback cycle, when obtained, can be input into the behavior adjuster to adjust the weights corresponding to the multiple target operation behaviors to obtain the target weights. Among them, the behavior adjuster can determine or adjust the weights corresponding to the multiple target operation behaviors, according to the operation frequencies, number of times or durations corresponding to the multiple target operation behaviors.

S132, pre-loading the multimedia to be played back based on the target weights and the target feature data to obtain pre-load data.

In some embodiments, in the process of pre-loading the multimedia to be played back according to the target weights and the target feature data, the target feature data corresponding to the target operation behavior with a high weight may be loaded first.

For example, the weight corresponding to an operation behavior of playing back the chorus in the multiple target operation behaviors is the highest, and the chorus part can be loaded first, and then the other parts are loaded.

Therefore, in some embodiments, the priorities corresponding to the multiple target operation behaviors may be determined based on the target weights, and the pre-load data corresponding to the target feature data may be pre-loaded based on the priorities.

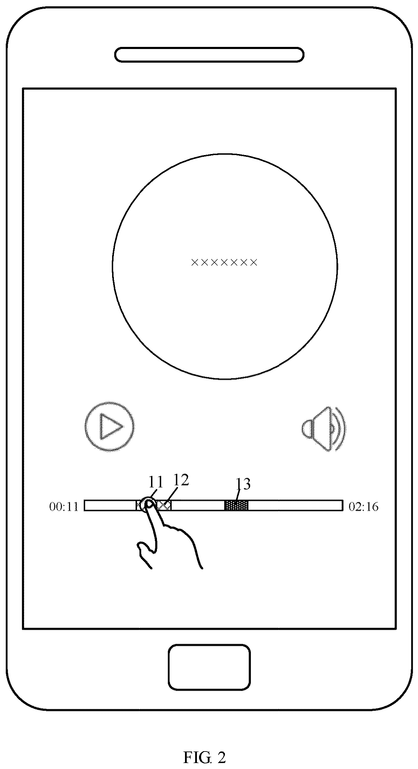

Exemplarily, as shown in FIG. 2 , FIG. 2 is an operation behavior of a certain type of user during music playing back in an exemplary embodiment of the present disclosure, 11 in FIG. 2 represents a song progress control, 12 represents the chorus part, and 13 represents the drum beat part. In the embodiment, the data range of the chorus part in the multimedia to be played back is between 10th second and 16th second, and the data range of the drum part in the multimedia to be played back is between 1min 20s and 1min 25s. Then, when pre-loading the multimedia to be played back according to the target weight and target feature data, since the operation behavior of playing back the chorus has the highest weight, the chorus part between the 10th and 16th seconds of the multimedia to be played back can be loaded first, and after the pre-loading is completed, the drum part between the 20th and 25th seconds of the multimedia to be played back can be pre-loaded, and finally other data of the multimedia to be played back can be pre-loaded. In some embodiments, corresponding parts such as chorus or drum beats can be 100% fully pre-loaded, or only a portion, such as 20%, of the part can be pre-loaded, depending on factors such as needs or network, but the embodiments are not so limited.

Based on the above embodiment, in order to continuously optimize and adjust the weights corresponding to the multiple target operation behaviors, in another embodiment provided by the present disclosure, the multimedia that has been played back includes a first multimedia and a second multimedia having adjacent playback cycles, and the first multimedia and the multimedia to be played back have adjacent playback cycles; the above step S131 may further specifically include the following steps:
Step S11: determining initial weights corresponding to multiple target operation behaviors respectively based on the feature data of the second multimedia.
Step S12, adjusting the initial weights according to the feature data of the first multimedia to obtain target weights corresponding to the multiple target operation behaviors.

In some embodiments, multimedia playback of a certain type of user within a day can be regarded as a playback cycle based on the multimedia playback cycle, such as one day. In this way, the target operation data of a certain type of user for multiple playback cycles of multimedia can be obtained, and according to the chronological order of the playback cycles, the initial weights corresponding to multiple target operation behaviors can be determined based on the multimedia played back in a playback cycle earlier in time , and the initial weights corresponding to multiple target operation behaviors can be optimized based on the multimedia played back in a playback cycle later in time to obtain the target weights. In the embodiment, the feature data of the first multimedia and the feature data of the second multimedia may respectively include feature data such as drum beats, chorus or verse.

Therefore, in the embodiment, the second multimedia may be multimedia that has been played back in a playback cycle earlier in time, and the first multimedia may be multimedia that has been played back in a playback cycle later in time. The initial weights corresponding to the multiple target operation behaviors can be determined through corresponding multiple target operation behaviors in the feature data of the second multimedia, and then the initial weights can be adjusted by corresponding multiple target operation behaviors in the feature data of the first multimedia to obtain the target weight. In this way, when multiple target operation behaviors in the latest playback cycle are obtained, the weights corresponding to the multiple target operation behaviors previously obtained can be adjusted and optimized through the multiple target operation behaviors in the latest playback cycle, so as to obtain more accurate pre-load data.

Based on the above embodiments, in another embodiment provided by the present disclosure, the above method may further include the following steps:
Step S140, acquiring network status information.
Step S150: determining a target amount of the pre-load multimedia to be played back based on the network status information.

In some embodiments, current network status information may be acquired, and the network status information may include a transmission bit rate of the current network, based on which the quality of the current network, such as good, medium or poor, can be determined. The network status information may also include a network type, such as WIFI, 4G or 5G.

For example, the target amount of multimedia to be played back that needs to be pre-loaded may be determined within a threshold range corresponding to the transmission bit rate of the current network, and the target amount may be positively correlated with the transmission bit rate. In addition, it can also be combined with the network type, for example, in the case of WIFI, the target amount can be greater than the preset amount, otherwise, in the case of 4G or 5G, the target amount is not greater than the preset amount.

Therefore, in embodiments of the present disclosure, pre-load data of a target amount of multimedia to be played back may be acquired based on network status information, target operation data, and target feature data. After the target amount of pre-load multimedia to be played back is determined, the target amount of multimedia to be played back can be pre-loaded to obtain pre-load data of the target number of multimedia to be played back. For example, since some music may not completely contain the target feature data, or the proportion of target feature data in different multimedia to be played back is different, each multimedia to be played back can be pre-loaded based on the target operation data and the target feature data, and it is determined how much corresponding pre-load data needs to be pre-loaded for each multimedia to be played back, such as how much of the chorus part needs to be pre-loaded, how much of the drum part needs to be pre-loaded, and so on.

The multimedia data pre-loading apparatus according to an embodiment of the present disclosure will be described below. The multimedia data pre-loading apparatus provided in the embodiment of the present disclosure can execute the multimedia data pre-loading method provided in any embodiment of the present disclosure. The embodiments of the present disclosure can divide the apparatus into functional units according to the above method examples. For example, each functional module/unit can be divided according to each function, or two or more functions can be integrated into one processing module. It shall be noted that the various modules/units included in the above-mentioned apparatus are only divided according to functional logic, but are not limited to the division described herein. In actual implementation, there may be other division manners as long as the corresponding functions can be achieved; in addition, the specific names of the modules/units are only for the convenience of distinguishing each other and are not used to limit the protection scopes of the embodiments of the present disclosure. Furthermore, each module/unit may be implemented in various appropriate ways, such as hardware, firmware, or any appropriate combination.

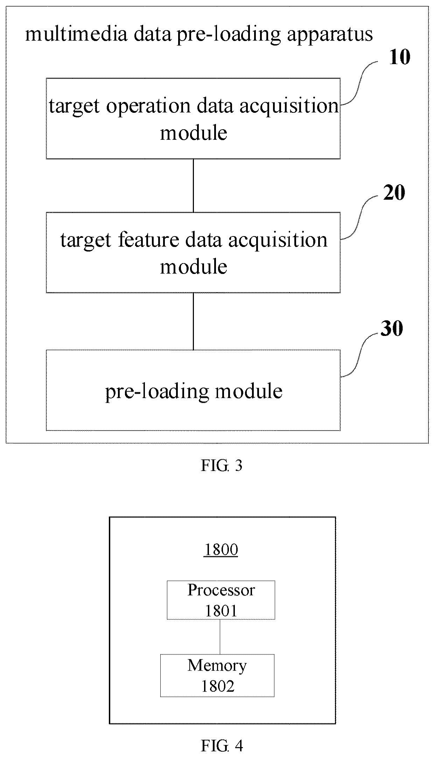

In the case of dividing each functional module according to each corresponding function, an embodiment of the present disclosure provides a multimedia data pre-loading apparatus, which may be a server or a chip applied to a server. FIG. 3 is a schematic block diagram of functional modules of a multimedia data pre-loading apparatus provided by an exemplary embodiment of the present disclosure. As shown in FIG. 3 , the multimedia data pre-loading apparatus includes:
a target operation data acquisition module 10 configured to acquire target operation data for multimedia that has been played back;
a target feature data acquisition module 20 configured to acquire target feature data of multimedia to be played back ;
a pre-loading module 30 configured to pre-load the multimedia to be played back, based on at least the target operation data and the target feature data.

In some embodiments, the target operation data includes multiple target operation behaviors; the pre-loading module is specifically configured to:
determine target weights corresponding to the plurality of target operation behaviors respectively;
pre-load the multimedia to be played back based on the target weights and the target feature data, to obtain pre-load data.

In some embodiments, the pre-loading module is further specifically configured to:
determine priorities corresponding to the multiple target operation behaviors respectively, based on the target weights;
pre-load the pre-load data corresponding to the target feature data based on the priorities.

In some embodiments, the multimedia that has been played back includes a first multimedia and a second multimedia having adjacent playback cycles, and the first multimedia and the multimedia to be played back have adjacent playback cycles; the pre-loading module is further specifically configured to:
determine initial weights corresponding to the plurality of target operation behaviors respectively, based on feature data of the second multimedia;
adjust the initial weights based on the feature data of the first multimedia to obtain the target weights corresponding to the multiple target operation behaviors respectively.

In some embodiments, the apparatus further includes:
an information acquisition module configured to acquire network status information;
an amount determination module configured to determine a target amount of the pre-load multimedia to be played back based on the network status information.

In some embodiments, the pre-loading module is further specifically configured to:
acquire pre-load data of the target amount of the multimedia to be played back, based on the network status information, the target operation data and the target feature data.

The related apparatus parts correspond to the above methods and can specifically refer to the above description of the method embodiments, which will not be described in detailed here.

The solutions proposed by the embodiments of the present disclosure have been described above. It can be understood that, in order to realize the above functions, the electronic device includes corresponding hardware structures and/or software modules for executing various functions. Those skilled in the art should readily appreciate that, in combination with the units and algorithm steps of the various examples described in the embodiments disclosed herein, the present disclosure can be implemented in the form of hardware or a combination of hardware and computer software. Whether a function is performed by hardware or by computer software driving hardware depends on the specific application and design constraints of the technical solution. A skilled person may use different methods to implement the described functionality for each specific application, but such implementation should not be considered to be beyond the scope of the present disclosure.

An embodiment of the present disclosure also provides an electronic device, comprising: at least one processor; a memory for storing instructions executable by the at least one processor; wherein the at least one processor is configured to execute the instructions to implement the above method disclosed in the embodiment of the present disclosure.

FIG. 4 is a schematic diagram of the structure of an electronic device provided by an exemplary embodiment of the present disclosure. As shown in FIG. 4 , the electronic device 1800 includes at least one processor 1801 and a memory 1802 coupled to the processor 1801, the processor 1801 can execute corresponding steps in the above methods disclosed in the embodiments of the present disclosure.

The processor 1801 may also be referred to as a central processing unit (CPU), which may be an integrated circuit chip having signal processing capabilities. Each step in the above method disclosed in the embodiments of the present disclosure can be completed by an integrated logic circuit of hardware in the processor 1801 or instructions in software forms. The processor 1801 mentioned above can be a general-purpose processor, a digital signal processor (DSP), an ASIC, a field-programmable gate array (FPGA) or other programmable logic devices, discrete gate or transistor logic devices, discrete hardware components. A general purpose processor may be a microprocessor, or the processor may be any conventional processor or the like. The steps of the method disclosed in the embodiments of the present disclosure may be directly implemented as being executed by a hardware decoding processor, or may be implemented as being executed by a combination of hardware and software modules in the decoding processor. The software module may be located in the memory 1802, such as a random access memory, a flash memory, a read-only memory, a programmable read-only memory, or an electrically erasable programmable memory, a register, or other mature storage media in the art. The processor 1801 reads the information in the memory 1802 and completes the steps of the above method in combination with its hardware.

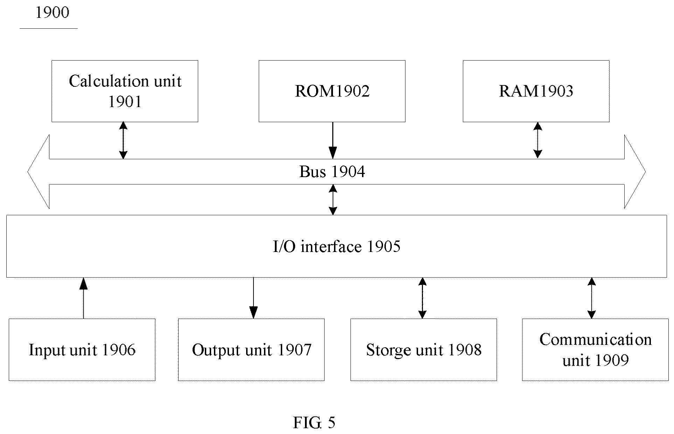

In addition, when various operations/processing according to the present disclosure are implemented by software and/or firmware, the programs constituting the software can be installed from a storage medium or a network to a computer system with a dedicated hardware structure, such as the computer system 1900 shown in FIG. 5. When the various programs are installed, the computer system can perform various functions, including the functions described above and so on. FIG. 5 is a structural block diagram of a computer system provided by an exemplary embodiment of the present disclosure.

Computer system 1900 is intended to represent various forms of digital electronic computer devices, such as laptops, desktops, workstations, personal digital assistants, servers, blade servers, mainframes, and other appropriate computers. Electronic devices may also refer to various forms of mobile devices, such as personal digital assistants, cellular phones, smart phones, wearable devices, and other similar computing devices. The components shown herein, their connections and relationships, and their functions, only serve as examples, and are not meant to limit implementations of the disclosure described and/or claimed herein.

As shown in FIG. 5, the computer system 1900 includes a computing unit 1901, which can perform various appropriate actions and processes according to a computer program stored in a read-only memory (ROM) 1902 or a computer program loaded from a storage unit 1908 to a random access memory (RAM) 1903. In the RAM 1903 , various programs and data necessary for the operation of the computer system 1900 may also be stored. The calculation unit 1901 , the ROM 1902 , and the RAM 1903 are connected to one another via a bus 1904. An input/output (I/O) interface 1905 is also connected to the bus 1904 .

Multiple components in the computer system 1900 are connected to the I/O interface 1905 , including an input unit 1906 , an output unit 1907 , a storage unit 1908 , and a communication unit 1909 . The input unit 1906 may be any type of device capable of inputting information to the computer system 1900 , and the input unit 1906 may receive input numeric or character information and generate key signal input related to user settings and/or function control of the electronic device. Output unit 1907 may be any type of device capable of presenting information, and may include, but is not limited to, a display, a speaker, a video/audio output terminal, a vibrator, and/or a printer. The storage unit 1908 may include, but is not limited to, a magnetic disk and an optical disk. The communication unit 1909 allows the computer system 1900 to exchange information/data with other devices over a network such as the Internet, and may include, but is not limited to, a modem, a network card, an infrared communication device, a wireless communication transceiver and/or a chipset, such as a Bluetooth^{™} device, a WiFi device, a WiMax device, a cellular communication device and/or the like.

The computing unit 1901 may be a variety of general and/or special processing components having processing and computing capabilities. Some examples of computing unit 1901 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 1901 executes the various methods and processes described above. For example, in some embodiments, the above methods disclosed in the embodiments of the present disclosure may be implemented as a computer software program, which is tangibly contained in a machine-readable medium, such as the storage unit 1908. In some embodiments, part or all of the computer program may be loaded and/or installed on the electronic device 1900 via the ROM 1902 and/or the communication unit 1909. In some embodiments, the computing unit 1901 may be configured to execute the above method disclosed in the embodiments of the present disclosure in any other appropriate manner (for example, by means of firmware).

An embodiment of the present disclosure further provides a computer-readable storage medium, wherein when instructions in the computer-readable storage medium are executed by a processor of an electronic device, the electronic device is enabled to execute the above method disclosed in the embodiments of the present disclosure.

The computer-readable storage medium in the embodiment of the present disclosure may be a tangible medium that may contain or store a program for use by an instruction execution system, apparatus, or device or for use in conjunction with an instruction execution system, apparatus, or device. The computer-readable storage medium may include, but is not limited to, electronic, magnetic, optical, electromagnetic, infrared, or semiconductor system, apparatus, or device, or any suitable combination of the foregoing. More specifically, the above-mentioned computer-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above contents.

The above computer-readable medium may be included in the electronic device, or may exist alone, without being incorporated into the electronic device.

An embodiment of the present disclosure further provides a computer program product, including a computer program, wherein when the computer program is executed by a processor, the above method disclosed in the embodiments of the present disclosure is implemented.

In an embodiment of the present disclosure, computer program codes for performing the operations of the present disclosure may be written in one or more programming languages or a combination thereof, and the programming languages include but not limited to object-oriented programming languages such as Java, Smalltalk, C++, and further include conventional procedural programming languages such as "C" language or similar programming languages. The program codes may execute entirely on the user's computer, partly on the user's computer, as a stand-alone software package, partly on the user's computer and partly on a remote computer, or entirely on the remote computer or server. Where a remote computer is involved, the remote computer may be connected to the user's computer through any type of network, including a Local Area Network (LAN) or a Wide Area Network (WAN), or may be connected to an external computer.

The flowcharts and block diagrams in the accompanying drawings illustrate possible implementation architectures, functions, and operations of systems, methods, and computer program products according to various embodiments of the present disclosure. In this regard, each block in the flowchart or block diagram may represent a module, a program segment, or a portion of code, which contains one or more executable instructions for implementing the specified logical functions. It should also be noted that, in some alternative implementations, the functions noted in the block may occur out of the order noted in the figures. For example, two blocks shown in succession may actually be executed substantially in parallel, or they may sometimes be executed in the reverse order, depending on the functionality involved.

It should also be noted that each box in the block diagram and/or flowchart, and combinations of boxes in the block diagram and/or flowchart, can be implemented by a dedicated hardware-based system that performs the specified function or operation, or can be implemented by a combination of dedicated hardware and computer instructions.

The modules, components or units involved in the embodiments described in the present disclosure may be implemented by software or by hardware. In some cases, the name of a module, component or unit does not constitute a limitation on the module, component or unit itself.

The functions described above herein may be performed at least in part by one or more hardware logic components. For example, without limitation, exemplary hardware logic components that may be used include: field programmable gate arrays (FPGAs), application specific integrated circuits (ASICs), application specific standard products (ASSPs), systems on chips (SOCs), complex programmable logic devices (CPLDs), and the like.

The above descriptions are merely illustrations of some embodiments and illustrations of the technical principles employed in the present disclosure. Those skilled in the art should understand that the scope of disclosure involved in the present disclosure is not limited to the technical solutions formed by a specific combination of the above-mentioned technical features, but should also cover other technical solutions formed by any combination of the above-mentioned technical features or their equivalent features without departing from the above-mentioned disclosure concepts. For example, the above-mentioned features are replaced with the technical features with similar functions disclosed in this disclosure (but not limited to) to form a technical solution.

Although some specific embodiments of the present disclosure have been described in detail through examples, those skilled in the art should understand that the above examples are only for illustration rather than for limiting the scope of the present disclosure. It will be appreciated by those skilled in the art that modifications may be made to the above embodiments without departing from the scope and spirit of the present disclosure. The scope of the present disclosure is defined by the appended claims.

## Claims

1. A multimedia data pre-loading method, the method comprising:
acquiring target operation data for multimedia that has been played back;
acquiring target feature data of multimedia to be played back;
pre-loading the multimedia to be played back, based on at least the target operation data and the target feature data.

2. The method according to claim 1, wherein the target operation data comprises a plurality of target operation behaviors;
the pre-loading the multimedia to be played back, comprises:
determining target weights corresponding to the plurality of target operation behaviors respectively;
pre-loading the multimedia to be played back based on the target weights and the target feature data, to obtain pre-load data.

3. The method according to claim 2, wherein the pre-loading the multimedia to be played back based on the target weights and the target feature data, comprises:
determining priorities corresponding to the multiple target operation behaviors respectively, based on the target weights;
pre-loading the pre-load data corresponding to the target feature data based on the priorities.

4. The method according to claim 2, wherein the multimedia that has been played back comprises a first multimedia and a second multimedia having adjacent playback cycles, and the first multimedia and the multimedia to be played back have adjacent playback cycles;
the determining target weights corresponding to the plurality of target operation behaviors respectively comprises:
determining initial weights corresponding to the plurality of target operation behaviors respectively, based on feature data of the second multimedia;
adjusting the initial weights based on the feature data of the first multimedia to obtain the target weights corresponding to the multiple target operation behaviors respectively.

5. The method according to any one of claims 2 to 4, wherein the method further comprises:
acquiring network status information;
determining a target amount of the pre-load multimedia to be played back based on the network status information.

6. The method according to claim 5, wherein the pre-loading the multimedia to be played back comprises:
acquiring pre-load data of the target amount of the multimedia to be played back, based on the network status information, the target operation data and the target feature data.

7. A multimedia data pre-loading apparatus, wherein the apparatus comprises:
a target operation data acquisition module configured to acquire target operation data for multimedia that has been played back;
a target feature data acquisition module configured to acquire target feature data of multimedia to be played back ;
a pre-loading module configured to pre-load the multimedia to be played back, based on at least the target operation data and the target feature data.

8. The apparatus according to claim 7, wherein the target operation data comprises a plurality of target operation behaviors;
the pre-loading module is further configured to:
determine target weights corresponding to the plurality of target operation behaviors respectively;
pre-load the multimedia to be played back based on the target weights and the target feature data, to obtain pre-load data.

9. The apparatus according to claim 7, wherein the pre-loading module is further configured to:
determine priorities corresponding to the multiple target operation behaviors respectively, based on the target weights;
pre-load the pre-load data corresponding to the target feature data based on the priorities.

10. The apparatus according to claim 7, wherein the multimedia that has been played back comprises a first multimedia and a second multimedia having adjacent playback cycles, and the first multimedia and the multimedia to be played back have adjacent playback cycles;
the pre-loading module is further configured to:
determine initial weights corresponding to the plurality of target operation behaviors respectively, based on feature data of the second multimedia;
adjust the initial weights based on the feature data of the first multimedia to obtain the target weights corresponding to the multiple target operation behaviors respectively.

11. The apparatus according to claim 7, wherein the apparatus further comprises:
an information acquisition module configured to acquire network status information;
a amount determination module configured to determine a target amount of the pre-load multimedia to be played back based on the network status information.

12. The apparatus according to claim 7, wherein the pre-loading module is further configured to:
acquire pre-load data of the target amount of the multimedia to be played back, based on the network status information, the target operation data and the target feature data.

13. An electronic device, comprising
at least one processor;
a memory storing executable instructions,
wherein the at least one processor is configured to execute the executable instructions to implement the method according to any one of claims 1-6.

14. A computer-readable storage medium storing instructions which, when executed by a processor, cause the processor to implement the method according to any one of claims 1-6.

15. A computer program product comprising instructions which, when executed by a processor, causes the processor to implement the method according to any one of claims 1-6.

16. A computer program comprising program codes, which, when executed by a processor, cause implementation of the method according to any one of claims 1-6.
